# EUROPÄISCHE PATENTSCHRIFT

(11) **EP 4 453 627 B1**
(45) Veröffentlichungstag und Bekanntmachung des Hinweises auf die Patenterteilung: **18.02.2026**
(21) Anmeldenummer: 22818762.1
(22) Anmeldetag: 21.11.2022
(51) Int. Cl.: G02B 21/00, G02B 21/36, G02B 21/18

(54) **MIKROSKOP UND VERFAHREN ZUR MIKROSKOPIE**
MICROSCOPE AND METHOD FOR MICROSCOPY
MICROSCOPE ET PROCÉDÉ POUR MICROSCOPIE

(30) Priorität: 22.12.2021 DE 102021134427
(43) Veröffentlichungstag der Anmeldung: 30.10.2024
(73) Patentinhaber: Carl Zeiss Microscopy GmbH, 07745 Jena (DE)
(72) Erfinder: ANHUT, Tiemo, 7745 Jena (DE); SCHWEDT, Daniel, 7745 Jena (DE); WALD, Matthias, 7751 Jena (DE)
(74) Vertreter: Schiffer, Axel Martin
(86) Internationale Anmeldenummer: PCT/EP2022/082544
(87) Internationale Veröffentlichungsnummer: WO 2023/117236

(56) Entgegenhaltungen:
- EP-A1- 3 614 190
- WO-A1-2012/002893
- US-A1- 2019 331 904
- TSANG JEAN-MARC ET AL: "Fast, multiplane line-scan confocal microscopy using axially distributed slits", BIOMEDICAL OPTICS EXPRESS, vol. 12, no. 3, 1 March 2021 (2021-03-01), United States, pages 1339, XP093028202, ISSN: 2156-7085, DOI: 10.1364/BOE.417286
- E. MEI ET AL: "A line scanning confocal fluorescent microscope using a CMOS rolling shutter as an adjustable aperture", JOURNAL OF MICROSCOPY, vol. 247, no. 3, 20 August 2012 (2012-08-20), pages 269 - 276, XP055141531, ISSN: 0022-2720, DOI: 10.1111/j.1365-2818.2012.03642.x
- XIAO SHENG ET AL: "High-contrast multifocus microscopy with a single camera and z-splitter prism", OPTICA, vol. 7, no. 11, 22 October 2020 (2020-10-22), pages 1477, XP093028220, DOI: 10.1364/OPTICA.404678

## Beschreibung

Die vorliegende Erfindung betrifft in einem ersten Gesichtspunkt ein Mikroskop nach dem Oberbegriff des Anspruchs 1. Außerdem betrifft die Erfindung ein Verfahren zur Mikroskopie.

Ein gattungsgemäßes Mikroskop ist beispielsweise bekannt aus US7335898 und weist auf: einen Beleuchtungsstrahlengang mindestens mit einer Beleuchtungssteuerungseinrichtung und einem Beleuchtungsobjektiv zum, insbesondere linienförmigen, Beleuchten und Abtasten einer Probe mit Anregungslicht, einen Detektionsstrahlengang mindestens mit einem Mikroskopobjektiv zum Leiten von von der Probe abgestrahltem Emissionslicht in Richtung einer Kamera, die Kamera zum Aufnehmen von Bildern der Probe und eine Steuereinheit zum Ansteuern mindestens der Beleuchtungssteuerungseinrichtung und der Kamera. Die Steuereinheit ist dazu eingerichtet, jeweils auszulesende Bereiche einer Sensorfläche der Kamera mit einer durch die Beleuchtungssteuerungseinrichtung definierten Position des Anregungslichts zu synchronisieren.

In der biomedizinischen Forschung werden zunehmend Prozesse in Zellverbünden, Organen oder ganzen Tieren studiert. Die Untersuchungsobjekte sind somit in der Regel nicht mehr flache zweidimensionale Objekte auf Glasträgern, sondern dreidimensionale Objekte, die hochsensitiv mit großer Geschwindigkeit als ganzes Volumen beobachtet werden sollen. Zur dreidimensionalen mikroskopischen Bildgebung hat sich das Laserscanmikroskop (LSM) etabliert, das jedoch die Forderung nach hohen Volumenraten nicht erfüllen kann.

Höhere Bildraten lassen sich durch Parallelisierung erreichen. Lösungen hierzu wurden beispielsweise in US7335898 vorgestellt. Darin wird die Probe mit einer linienförmigen Lichtverteilung abgetastet, die mit dem Rolling Shutter einer CMOS-Kamera synchronisiert ist. Der Rolling Shutter wirkt dabei wie eine bewegliche elektronische Konfokalblende und ermöglicht damit das vom LSM bekannte optische Schneiden (optical sectioning) mit entsprechend kontrastreicher Bildgebung. Mit dieser Technologie sind zwar schon höhere Bildraten möglich, die Volumenraten bleiben aber auf wenige Volumen pro Sekunde begrenzt. Außerdem bewirkt eine Linienbeleuchtung in einem größeren axialen Probenbereich eine erhöhte Probenbelastung, da die Lichtintensität nur linear mit dem Abstand zur Fokusebene abfällt und nicht quadratisch wie bei der Punktbeleuchtung. Somit bleibt die Strahlungsintensität über einen ausgedehnten axialen Bereich hoch, ohne dass eine Information über die Probe erfasst wird. Dieser bei einer Linienbeleuchtung unvermeidbare Effekt ist insbesondere in Hinsicht auf nichtlineares Bleichen, wie es gerade relevante fluoreszente Proteine zeigen, nachteilig (Sci. Rep. 2015 Oct 20;5:15348. doi: 10.1038/srep15348).

Um die Probenbelastung zu reduzieren und die Volumenrate gleichzeitig zu vergrößern, wurden zusätzlich in axialer Richtung parallelisierte Mikroskopsysteme vorgeschlagen (Jean-Marc Tsang et al., Biomed. Opt. Expr. 12, 1339 (2021)). Dabei wird in drei verschiedenen axialen Ebenen ein verspiegelter Spalt angeordnet, um die Emission aus der dazu konjugierten Ebene in Richtung einer Kamera zu reflektieren. Die vorgeschlagene Anordnung ist dahingehend aufwendig, dass die Emission auf die Kamera rescannt werden muss. Es sind somit viele aufeinanderfolgende Abbildungsstufen notwendig, die zu Verlusten und Abbildungsfehlern führen. Außerdem ist diese Anordnung wenig flexibel, da die reflektierenden Elemente, die die Funktion der konfokalen Linienblende übernehmen, ortsfest und unveränderlich in den Strahlengang integriert wurden. Diese Blende muss aber, wie im punktscannenden System auch, an das Objektiv anpassbar sein.

In der Regel werden Größen von z.B. einer Airyeinheit (AU - Airy unit) als Blendengrö-ßen genutzt. Hierbei ist eine Airyeinheit dadurch definiert, dass man die Punktbildverwaschungsfunktion in der Probe, welche durch die numerische Apertur (NA) des Objektivs bestimmt ist, mit dem entsprechenden Vergrößerungsfaktor, wie er durch das Objektiv und die Tubuslinse gegeben ist, in die Ebene der Blende abbildet. Eine Anpassung wird notwendig, wenn man verschiedene Auflösungsstufen und Bildfeldgrößen einstellen möchte. Bei der von Tsang et al. vorgeschlagenen Lösung werden die Blenden auf die Kamera abgebildet. Bei Oberflächendefekten können so störende Streifen im Bild auftreten.

Sodann sind aus der Weitfeldmikroskopie Ansätze zur sogenannten Bildteilung (Image Splitting) bekannt, die es ermöglichen, mehrere Objektebenen nebeneinander auf einem Kamerasensor anzuordnen (GB2442576B oder Sheng Xiao et al., Optica 7, 1477 (2020)). Insbesondere die Anordnung von Sheng Xiao et al. kann zu Bildartefakten neigen, da optische Grenzflächen in der Nähe der Bildebenen angeordnet sind. Andere Anordnungen, etwa der in WO13106731A1 beschriebene Aufbau, sind vergleichsweise komplex und erscheinen nicht tauglich für eine Serienproduktion.

In E. MEI ET AL: "A line scanning confocal fluorescent microscope using a CMOS rolling shutter as an adjustable aperture", JOURNAL OF MICROSCOPY, Bd. 247, Nr. 3, EP 3 614 190 A1, WO 2012/002893 A1 und US 2019/331904 A1 sind Anordnungen offenbart, bei denen Rolling-Shutter-Detektoren zum Einsatz kommen.

Als eine Aufgabe der Erfindung kann angesehen werden, ein Mikroskop und ein Verfahren zur Mikroskopie anzugeben, bei denen bei akzeptabler Lichtbelastung der Proben und akzeptablem apparativem Aufwand hohe Bild- und Volumenraten erreicht werden.

Diese Aufgabe wird durch das Mikroskop mit den Merkmalen des Anspruchs 1 und durch das Verfahren mit den Merkmalen des Anspruchs 16 gelöst.

Das Mikroskop der oben angegebenen Art ist erfindungsgemäß dadurch weitergebildet, dass im Detektionsstrahlengang eine Bildteilereinheit vorhanden ist zum Aufteilen des Emissionslichts in mehrere Teilstrahlengänge, die jeweils ein Teilbild der Probe auf der Sensorfläche der Kamera erzeugen, wobei die Teilbilder auf der Sensorfläche dergestalt nebeneinander liegen, dass linienförmige Bereiche in den Teilbildern, die einer durch die Beleuchtungssteuerungseinrichtung definierten Position des Anregungslichts auf oder in der Probe entsprechen, auf derselben Zeile oder denselben Zeilen der Sensorfläche liegen.

Bei dem erfindungsgemäßen Verfahren zur Mikroskopie werden folgende Schritte durchgeführt: eine Probe wird durch ein Beleuchtungsobjektiv mit Anregungslicht, insbesondere linienförmig, beleuchtet und abgetastet, von der Probe abgestrahltes Emissionslicht wird über ein Mikroskopobjektiv in Richtung einer Kamera geleitet, strahlabwärts von dem Mikroskopobjektiv wird das Emissionslicht in mehrere Teilstrahlengänge aufgeteilt, wobei jeder der Teilstrahlengänge ein Teilbild der Probe auf einer Sensorfläche der Kamera erzeugt und wobei die Teilbilder der Probe auf der Sensorfläche dergestalt nebeneinander liegen, dass linienförmige Bereiche in den Teilbildern, die einer Position des Anregungslichts auf oder in der Probe entsprechen, auf derselben Zeile oder denselben Zeilen der Sensorfläche liegen, und schließlich werden auszulesende Bereiche der Sensorfläche der Kamera mit der Position des Anregungslichts auf der Probe synchronisiert.

Das erfindungsgemäße Mikroskop ist zur Durchführung des erfindungsgemäßen Verfahrens geeignet. Das erfindungsgemäße Verfahren kann insbesondere mit dem erfindungsgemäßen Mikroskop durchgeführt werden.

Bevorzugte Ausgestaltungen des erfindungsgemäßen Mikroskops und vorteilhafte Varianten des erfindungsgemäßen Verfahrens werden im Folgenden, insbesondere im Zusammenhang mit den abhängigen Ansprüchen und den Figuren erläutert.

Das Anregungslicht ist elektromagnetische Strahlung, insbesondere im sichtbaren Spektralbereich und angrenzenden Bereichen. An das kontrastgebende Prinzip ist für die vorliegende Erfindung nur insoweit eine Anforderung gestellt, als die Probe infolge der Bestrahlung mit dem Anregungslicht Emissionslicht abstrahlt. Typischerweise ist das Emissionslicht Fluoreszenzlicht, welches die Probe, insbesondere dort vorhandene Farbstoffmoleküle, infolge der Bestrahlung mit dem Anregungslicht abstrahlt oder abstrahlen.

Mit dem Begriff des Beleuchtungsstrahlengangs werden alle optischen strahlführenden und strahlverändernden Komponenten bezeichnet, beispielsweise Linsen, Spiegel, Prismen, Gitter, Filter, Blenden, Strahlteiler, mit denen und über welche das Anregungslicht von einer Lichtquelle, beispielsweise einem Laser, bis auf die zu untersuchende Probe geleitet wird. Der Beleuchtungsstrahlengang beinhaltet mindestens die Beleuchtungssteuerungseinrichtung, beispielsweise einen Scanner mit mindestens einem galvanometrischen Spiegel, und ein Beleuchtungsobjektiv. Das Beleuchtungsobjektiv kann ein Mikroskopobjektiv grundsätzlich bekannter Natur sein. Der Beleuchtungsstrahlengang kann durch den Beleuchtungsstrahlengang eines Laserscanmikroskops verwirklicht sein.

Von der zu untersuchenden Probe infolge der Bestrahlung mit dem Anregungslicht ausgesandtes Licht wird als Emissionslicht bezeichnet und gelangt über den Detektionsstrahlengang auf die Kamera. Mit dem Begriff des Detektionsstrahlengangs werden alle strahlführenden und strahlverändernden optischen Komponenten, beispielsweise Linsen, Spiegel, Prismen, Gitter, Filter, Blenden, Strahlteiler, bezeichnet, mit denen und über welche das Emissionslicht von der zu untersuchenden Probe bis auf die Kamera geleitet wird. Die Kamera ist ein hinreichend schneller optischer Detektor mit einer zweidimensional ortsauflösenden Sensorfläche, deren Pixel mindestens bereichsweise, insbesondere zeilenweise, schnell ausgelesen werden können.

Mit dem Begriff der Steuereinheit werden alle Hardware- und Softwarekomponenten bezeichnet, die mit den Komponenten des erfindungsgemäßen Mikroskops zu dessen bestimmungsgemäßer Funktion zusammenwirken. Insbesondere kann die Steuereinheit eine Recheneinrichtung, beispielsweise einen PC, und eine Kamerasteuerung aufweisen, die zum schnellen Auslesen von Messsignalen, insbesondere von Zeilen der Sensorfläche, in der Lage ist. Erfindungsgemäß ist die Steuereinheit dazu eingerichtet, jeweils auszulesende Bereiche einer Sensorfläche der Kamera, insbesondere Zeilen der Sensorfläche, mit einer durch die Beleuchtungssteuerungseinrichtung, beispielsweise den Scanner, genauer gesagt durch die Stellung des Scanners, definierten Position des Anregungslichts auf oder in der Probe zu synchronisieren. Die Steuereinheit kann auch eingerichtet sein zum Auswerten der von der Kamera gelieferten Bilddaten,

Mit dem Begriff der Bildteilereinheit werden alle strahlführenden und strahlverändernden optischen Komponenten bezeichnet, beispielsweise Linsen, Spiegel, Prismen, Gitter, Filter, Blenden, Strahlteiler, mit denen und über welche das Emissionslicht in die mindestens zwei Teilbilder auf die Sensorfläche der Kamera geleitet wird.

Die Kamera kann beispielsweise eine CMOS- oder sCMOS-Kamera mit Rolling-Shutter-Elektronik sein. Der Rolling Shutter ist zweckmäßig mit der Scangeschwindigkeit der Linienbeleuchtung synchronisiert. Die ausgelesenen Kamerapixel sind also zu einer Momentanposition des Linienfokus auf der Probe optisch konjugiert. Ebenso kann eine SPAD-Kamera eingesetzt werden, deren Auslesematrix dynamisch einstellbar ist, so dass eine Synchronisierung mit dem Vorschub des Linienfokus möglich wird.

Beispielsweise kann eine Kamera vom Typ "pco.edge 10 bi CLHS" der Firma Excelitas PCO GmbH, 93309 Kelheim, Deutschland verwendet werden.

Für Fluoreszenz-Mikroskopie mit mehreren Farbstoffen kann auch bevorzugt sein, wenn die Kamera eine farbauflösende Kamera ist. Beispielsweise kann die Kamera einen Bayerfilter aufweisen.

Höhere Grade der Parallelisierung der Bildaufnahme und damit höhere Bild- und Volumenraten sind möglich, wenn die Kamera zum schnellen zusammenhängenden Auslesen von mehr als einem Bereich, insbesondere mehr als einer Zeile, eingerichtet ist. Beispielsweise kann die Kamera mehrere Rolling-Shutter-Blenden aufweisen. Im Sinn der Erfindung kann auch eine solche Kamera zum Einsatz kommen, indem man erfindungsgemäße Verfahren auf die dann vorliegende Situation sowohl in der Beleuchtung als auch in der Detektion anpasst. Konkret wird dann für jeden zur Verfügung stehenden auszulesenden Bereich eine entsprechende Beleuchtung der Probe bereitgestellt. Beispielsweise kann die Probe bei Verwendung einer Kamera mit mehreren Rolling-Shutter-Blenden gleichzeitig mit mehreren Beleuchtungslinien beleuchtet werden, die mit der Beleuchtungssteuerungseinrichtung, insbesondere einem Scanner, über die Probe geführt werden.

Zum Aufnehmen oder Halten der Probe kann das Mikroskop eine Probenhalterung grundsätzlich bekannter Art aufweisen.

Das Beleuchtungsobjektiv und das Mikroskopobjektiv können separate Objektive sein, etwa bei einer Durchlichtbeleuchtung. Es ist aber auch möglich, dass das Beleuchtungsobjektiv und das Mikroskopobjektiv ein und dasselbe Objektiv ist. Zum Trennen des Emissionslichts von Anteilen des Anregungslichts in dem von der Probe insgesamt zurückgestrahlten Licht kann dann zweckmäßig ein Hauptfarbteiler vorhanden sein. Gegebenenfalls können mehrere, insbesondere manuell oder durch die Steuerung austauschbare, Mikroskopobjektive, angeordnet beispielsweise auf einem Revolver oder einem Linearschieber, vorhanden sein.

Zum Bereitstellen des Anregungslichts kann mindestens eine Lichtquelle, insbesondere ein Laser, vorhanden sein. Die spektrale Zusammensetzung des Anregungslichts kann, insbesondere zwischen zwei oder mehr Farben, einstellbar sein. Das Anregungslicht kann auch simultan polychromatisch sein, beispielsweise wenn gleichzeitig unterschiedliche Farbstoffe nachgewiesen werden sollen. Der Hauptfarbteiler kann für diese oder andere Anwendungen ein Doppelbandpass-Filter oder Mehrfachbandpass-Filter sein.

In grundsätzlich bekannter Weise kann im Beleuchtungsstrahlengang ein Linsensystem zum Abbilden des Scanners oder der Scanner in eine hintere Brennebene des Beleuchtungsobjektivs vorhanden sein.

Als eine wesentliche Idee der vorliegenden Erfindung kann zunächst angesehen werden, das von der Probe abgestrahlte und die zu extrahierende mikroskopische Information enthaltende Emissionslicht, in mehrere Teilstrahlenbündel aufzuteilen, die sodann jeweils Teilbilder der Probe in der Ebene der Sensorfläche generieren. Eine weitere wesentliche Idee der vorliegenden Erfindung ist, die Teilbilder so auf der Sensorfläche der Kamera zu positionieren, dass das schnelle Auslesen, insbesondere der Pixel einer Zeile, für alle Teilbilder gleichzeitig genutzt werden kann.

Beispielsweise kann die Bildteilereinheit auf die Sensorfläche einer Kamera drei Teilbilder der Probe aus unterschiedlichen Tiefen nebeneinander so ablegen, dass für alle Teilbilder die Position des Linienfokus auf dieselben Sensorzeilen fällt. In dem Fall, dass die Ausbreitungsrichtung der Linie parallel zur optischen Achse des Mikroskopobjektivs ist oder mit dieser zusammenfällt, werden auf der Kamera Bilder abgelegt, die z.B. drei Ebenen der Probe entsprechen, die lateral den gleichen Bereich überdecken. Bei einer Inklination der Propagationsrichtung der Linienbeleuchtung wären die Bilder lateral gegeneinander versetzt. Entscheidend ist, dass die einstellbare elektronische Detektionsblende der Kamera mit dem durch die Linie in der jeweiligen Ebene beleuchteten Bereich im Wesentlichen zusammenfällt.

Mit der vorliegenden Erfindung werden ein Mikroskop und ein Verfahren zur Mikroskopie bereitgestellt, bei denen die in die Probe eingetragene Energie, insbesondere aufgrund axialer Mehrfachabtastung, effektiver zur Bildgebung genutzt wird. Die effektive Bestrahlungsdauer der Probe wird dadurch verkürzt und bei gleicher Gesamtstrahlungslast können höhere Bild- und Volumenraten erreicht werden. Der gerätetechnische Aufwand bleibt dabei im Rahmen. Insbesondere können vorhandene Mikroskope mit den zur Verwirklichung der Erfindung notwendigen Komponenten nachgerüstet werden. Gegebenenfalls kann die Detektionsoptik an eine konkrete zu untersuchende Probe und an eine konkrete Messaufgabe angepasst werden.

Bei dem erfindungsgemäßen Mikroskop und dem erfindungsgemäßen Verfahren können die linienförmigen Bereiche in den Teilbildern, die auf der Sensorfläche nebeneinander liegen, insbesondere optisch konjugiert sein zu den linienförmig beleuchteten Bereichen auf oder in der Probe.

Mit optisch konjugiert ist in diesem Zusammenhang insbesondere gemeint, dass zwischen den optisch konjugierten Flächen oder Flächenbereichen eine durch die Optik vermittelte Punkt-zu-Punkt-Beziehung besteht. Im konkreten Beispiel besteht also zwischen den Punkten auf oder in den linienförmig beleuchteten Bereichen auf oder in der Probe eine Punkt-zu-Punkt-Beziehung zu Punkten in den linienförmigen Bereichen der Teilbilder. Mit dem Begriff einer durch die Optik vermittelten Punkt-zu-Punkt-Beziehung zwischen einem Punkt im Objektraum (der Probe) und einem Punkt auf der Sensorfläche der Kamera ist gemeint, dass ein von dem Punkt im Objektraum ausgehendes Strahlenbündel von der Optik in den Punkt auf der Sensorfläche der Kamera abgebildet wird.

Grundsätzlich wird die Erfindung verwirklicht bei Anordnungen, bei denen ein Abstand zwischen dem Beleuchtungsobjektiv und der Probe manuell verändert und eingestellt wird. Bei einer vorteilhaften Ausgestaltung des erfindungsgemäßen Mikroskops ist eine steuerbare Verschiebeeinrichtung zum Ändern eines Abstands zwischen dem Beleuchtungsobjektiv und der Probe vorhanden und die Steuereinheit ist eingerichtet zum Steuern der Verschiebeeinrichtung, insbesondere abgestimmt auf die Ansteuerung der Beleuchtungssteuerungseinrichtung. Mit dieser apparativen Ergänzung können automatisiert Volumenscans durchgeführt werden.

Bevorzugt wird die Probe mit einer linienförmigen Verteilung des Anregungslichts beleuchtet und abgetastet. Vorteilhaft ist dazu im Beleuchtungsstrahlengang zum Erzeugen der linienförmigen Verteilung des Anregungslichts in einer Probenebene eine, insbesondere in den Beleuchtungsstrahlengang einschwenkbare, Zylinderoptik, anamorphotische Optik oder anamorphe Optik, beispielsweise eine Zylinderlinse, vorhanden. Alternativ oder ergänzend kann im Beleuchtungsstrahlengang zum Erzeugen der linienförmigen Verteilung des Anregungslichts in einer Probenebene eine, insbesondere in den Beleuchtungsstrahlengang einschwenkbare, Powell-Linse vorhanden sein.

Grundsätzlich kann es für viele Anwendungen ausreichend sein, wenn die linienförmige Verteilung des Anregungslichts eine unveränderliche Breite aufweist. Bei einer vorteilhaften Weiterentwicklung des erfindungsgemäßen Mikroskops ist im Beleuchtungsstrahlengang zum Variieren einer Breite eines Linienfokus in der Probenebene eine, insbesondere in den Beleuchtungsstrahlengang einschwenkbare, zweite Zylinderoptik, beispielsweise eine astigmatische Linse, vorhanden.

Grundsätzlich kann es für viele Anwendungen ausreichend sein, wenn die axiale Verteilung des Anregungslichts, also die Intensitätsverteilung des Anregungslichts in der Richtung der optischen Achse eine unveränderliche Breite aufweist. Insbesondere im Hinblick auf Volumenscans kann es aber vorteilhaft sein, wenn im Beleuchtungsstrahlengang optische Mittel, insbesondere Linsen und/oder Blenden, zum Einstellen einer numerischen Apertur und damit einer Fokustiefe oder Schärfentiefe der linienförmigen Beleuchtung vorhanden sind. Beispielsweise kann zum Einstellen der Fokustiefe der linienförmigen Beleuchtung im Beleuchtungsstrahlengang eine Zoomoptik vorhanden sein. Alternativ oder ergänzend kann zum Einstellen der Fokustiefe der linienförmigen Beleuchtung im Beleuchtungsstrahlengang eine Abblendeinrichtung vorhanden ist.

Die Beleuchtungssteuerungseinrichtung dient zum räumlichen Manipulieren oder Positionieren des Anregungslichts auf oder in der Probe. Die Beleuchtungssteuerungseinrichtung kann beispielsweise einen, insbesondere galvanometrischen, Scanner grundsätzlich bekannter Natur aufweisen. Alternativ oder ergänzend kann die Beleuchtungssteuerungseinrichtung ein, insbesondere ansteuerbares und/oder programmierbares, Mikrospiegelarray, DMD, aufweisen.

Wenn die Ausdehnung der linienförmigen Verteilung des Anregungslichts in Richtung der Linie größer ist als die Ausdehnung des beobachteten Bildfelds der Teilbilder reicht ein Scanner aus, der die linienförmige Verteilung des Anregungslichts in einer Richtung quer zur Richtung der Linie über oder durch die Probe bewegt. Bei einer weiteren vorteilhaften Ergänzung des erfindungsgemäßen Mikroskops weist die die Beleuchtungssteuerungseinrichtung zum Scannen in einer Richtung parallel zur Linienbeleuchtung einen zweiten Scanner auf. Dieser Scanner kann insbesondere dazu dienen, die Probe in der Erstreckungsrichtung der Beleuchtungslinie zu scannen und/oder eine Länge der Beleuchtungslinie in der Probe auf einen gewünschten Wert anzupassen.

Alternativ oder ergänzend kann in diesem Zusammenhang auch im Beleuchtungsstrahlengang ein Anregungsfilter, beispielsweise in einem Filterwürfel, durch eine Zylinderlinse ersetzt werden, die dann durchscannt wird. Diese technische Lösung kann ohne Weiteres an jedem Laser-Scanning-Mikroskops nachgerüstet werden.

Die Erfindung wird grundsätzlich verwirklicht, wenn die Bildteilereinheit irgendwo zwischen der Probe und der Kamera angeordnet ist.

Die Bildteilereinheit kann zum Aufteilen des Emissionslichts grundsätzlich bekannte Komponenten aufweisen. Bei einer Ausgestaltung weist die Bildteilereinheit mindestens eine diffraktive Einrichtung, insbesondere ein Gitter und/oder einen Spatial Light Modulator, zum Aufteilen des Emissionslichts auf. Die diffraktive Einrichtung ist bevorzugt in einer Pupille oder in der Nähe einer Pupille des Detektionsstrahlengangs angeordnet.

Mit einer Pupillenebene ist die hintere Brennebene des Mikroskopobjektivs, d.h. die auf der anderen Seite als die Probe liegende Brennebene, oder eine zur hinteren Brennebene des Mikroskopobjektivs optisch konjugierte Ebenen gemeint.

Bei anderen Varianten des erfindungsgemäßen Mikroskops weist die Bildteilereinheit zum Aufteilen des Emissionslichts alternativ oder ergänzend mindestens eine monolithische Komponente auf, bestehend beispielsweise aus geklebten und/oder beschichteten Prismen oder Platten. Solche Komponenten können insbesondere nicht einstellbar sein.

Bei vorteilhaften Varianten des erfindungsgemäßen Mikroskops, die insbesondere eine relativ unaufwändige Nachrüstbarkeit an bestehende Mikroskopsysteme erlauben, ist die Bildteilereinheit im Detektionsstrahlengang zwischen einem Zwischenbild strahlabwärts von einer Tubuslinse und der Kamera angeordnet.

Die Bildteilereinheit kann beispielsweise so verwirklicht sein, dass das Emissionslicht durch Strahlteiler aufgeteilt wird und sodann mit jeweils separaten optischen Mitteln in beugungsbegrenzte Teilbilder auf die Kamera geleitet wird. Bei einer vorteilhaften Ausgestaltung des erfindungsgemäßen Mikroskops, weist die Bildteilereinheit ein Relay-Linsensystem mit einer Eintrittslinse und einer Austrittslinse auf, zwischen denen mindestens ein Strahlteiler angeordnet ist. Bei dieser Variante kann mindestens die Austrittslinse des Relay-Linsensystems gleichzeitig von mindestens zwei Teilstrahlengängen genutzt werden.

Um Punktverwaschungsfunktionen lateral ausmessen zu können, beispielsweise wenn einzelne Farbstoffmoleküle lokalisiert werden sollen, kann eine Vergrößerung des Relay-Linsensystems der Bildteilereinheit vorteilhaft so gewählt sein, dass der Durchmesser eines Airy-Scheibchens auf der Sensorfläche der Kamera mindestens viermal so groß ist wie ein Abstand von benachbarten Pixeln der Kamera. Dabei wird unter dem Durchmesser des Airy-Scheibchens der Durchmesser des ersten Beugungsminimums, also des ersten dunklen Rings, verstanden.

Äquivalent dazu ist die Forderung, dass die Vergrößerung des Relay-Linsensystems der Bildteilereinheit so gewählt wird, dass die Halbwertsbreite der zu dem Airy-Scheibchen gehörenden Punktbildfunktion auf der Sensorfläche der Kamera mindestens doppelt so groß ist wie ein Abstand von benachbarten Pixeln der Kamera. Unter der Halbwertsbreite der Punktbildfunktion wird dabei der Durchmesser des Bereichs verstanden, an dessen Umrandung die Intensität der Punktbildfunktion auf die Hälfte des Maximums abgefallen ist.

Ein besonderer Vorteil der Erfindung ist, dass Gestaltungfreiheit besteht betreffend den oder die Parameter, in dem oder in denen sich die Teilbilder unterscheiden. Beispielsweise können die Teilbilder zu axial voneinander beabstandeten Ebenen in der Probe gehören. Für diesen Zweck kann mindestens einer der Strahlteiler, insbesondere mehr als einer oder jeder der Strahlteiler, ein Neutralteiler sein, d.h. die Teilstrahlengänge können in spektraler Hinsicht identisch sein. Bei einer anderen Variante unterscheiden sich die Teilbilder in spektraler Hinsicht. Beispielsweise kann in einem ersten Teilbild im Wesentlichen ein erster und in einem zweiten Teilbild im Wesentlichen ein zweiter Farbstoff sichtbar sein.

Für diesen Zweck kann mindestens einer der Strahlteiler, insbesondere mehr als einer oder jeder der Strahlteiler, ein dichroitischer Strahlteiler sein, d.h. die Teilstrahlengänge können in spektraler Hinsicht unterschiedlich sein. Die Verwendung von zwei- oder mehrfarbigem Anregungslicht kann in diesem Fall sinnvoll sein.

Mischformen dieser Varianten sind grundsätzlich möglich, das heißt, die Teilbilder können sowohl zu axial beabstandeten Probenebenen gehören als auch spektral unterschiedlich sein. In Spezialsituationen kann das von Vorteil sein.

In grundsätzlich bekannter Weise kann mindestens einer der Strahlteiler und insbesondere mehr als einer oder jeder der Strahlteiler austauschbar und/oder umschaltbar angeordnet sein, beispielsweise auf einem Linearschieber oder einem Revolver.

Bevorzugt sind die Teilstrahlengänge der Austrittslinse des Relay-Linsensystems so zugeführt, dass die zugehörigen mindestens zwei Teilbilder nebeneinander auf der Sensorfläche der Kamera dergestalt angeordnet sind, dass linienförmige Bereiche in den Teilbildern, die insbesondere optisch konjugiert sind zu linienförmig beleuchteten Bereichen auf oder in der Probe, auf derselben Zeile oder denselben Zeilen der Sensorfläche liegen.

Eine weitere vorteilhafte Ausgestaltung des erfindungsgemäßen Mikroskops zeichnet sich dadurch aus, dass in mindestens einem der Teilstrahlengänge der Bildteilereinheit, bevorzugt in mehreren oder allen Teilstrahlengängen der Bildteilereinheit, insbesondere ansteuerbare, Umlenkelemente, insbesondere Umlenkspiegel, vorhanden sind. Bevorzugt kann dann außerdem die Steuereinheit dazu eingerichtet sein, die ansteuerbaren Umlenkelemente unter Verwendung eines Steuersignals für die Kamera anzusteuern dergestalt, dass eine konfokale Bedingung für alle Bilder der jeweiligen Ebenen durch den konfokalen Auslesebereich erfüllt ist.

Im Zusammenhang mit den einzusetzenden Strahlteilern wurde schon erläutert, dass bei einer Variante der Erfindung die mindestens zwei Teilbilder zu axial versetzten Bereichen der Probe gehören können. Beispielsweise kann bei einer weiteren Variante des erfindungsgemäßen Mikroskops in mindestens einem der Teilstrahlengänge der Bildteilereinheit bevorzugt in mehreren oder allen Teilstrahlengängen der Bildteilereinheit, eine zusätzliche Linse angeordnet sein. Durch diese Linse oder Linsen können unterschiedliche axiale Lagen der zu den Teilbildern gehörenden Probenebenen erreicht werden.

Besonders vorteilhaft ist außerdem eine Weiterbildung des erfindungsgemäßen Mikroskops, wo ein axialer Abstand der Probenebenen, zu denen die Teilbilder gehören und die zur Ebene der Sensorfläche optisch konjugiert sind, einstellbar ist. Beispielsweise kann eine Brennweite der mindestens einen zusätzlichen Linse veränderlich und insbesondere auf unendlich einstellbar sein Die mindestens eine zusätzliche Linse kann eine elektrisch einstellbare Linse (ETL) sein. Die Steuereinheit kann dazu eingerichtet sein, die Brennweite der mindestens einen zusätzlichen Linse zu steuern.

Alternativ können auch in einem Bereich zwischen der Ausgangslinse und der Sensorfläche der Kamera in einer Ebene, in der die Teilbilder nicht mehr überlappen, unterschiedlich dicke Glasblöcke eingebracht werden, um den jeweils gewünschten axialen Versatz der Teilbilder zueinander zu erzeugen.

Bei einer vorteilhaften Ergänzung können bei dem erfindungsgemäßen Mikroskop zum Abgleich von axialen Lage der Pupillen für die Teilstrahlengänge in der Bildteilereinheit Umlenkelemente und/oder Glasblöcke vorhanden sein.

Bei einer weiteren bevorzugten Ausgestaltung des erfindungsgemäßen Mikroskops ist zum Anpassen einer Größe der Teilbilder in einer Zwischenbildebene im Detektionsstrahlengang eine Feldblende vorhanden. Durch geeignetes Einstellen dieser Feldblende kann vermieden werden, dass sich die Teilbilder auf der Sensorfläche der Kamera überlappen,

Bei einer wichtigen Variante des erfindungsgemäßen Verfahrens werden Bilder von ausgedehnten Volumenbereichen aufgenommen, d.h. es werden Volumenscans durchgeführt. Im Vergleich zum Stand der Technik ist das mit der vorliegenden Erfindung schneller und mit geringerer Lichtbelastung der Probe, also vergleichsweise probenschonend, möglich.

In grundsätzlich bekannter Weise können aus den Bildern eines ausgedehnten Volumenbereichs, insbesondere automatisiert, interessierende Bereiche ausgewählt werden, die dann mit einem Laser-Scanning-Mikroskop näher untersucht werden.

Weiterhin kann in grundsätzlich bekannter Weise auf Grundlage von Messdaten eines Laser-Scanning-Mikroskops einer Probe, insbesondere automatisiert, entschieden werden, von welchen Volumenbereichen der betreffenden Probe Bilder aufgenommen werden.

Bei den Volumenscans sind die zu den Teilbildern gehörenden Probenebenen axial gegeneinander versetzt und der Abstand zwischen dem Mikroskopobjektiv und der Probe wird über einen bestimmten Scanhub in einer festzulegenden Schrittweite, verändert und für jeden Abstand der Probe von dem Mikroskopobjektiv wird eine der Anzahl der Teilbilder entsprechende Zahl von Bildern aufgenommen. Die einzelnen Bilder können dann von der Steuereinheit zu einem 3D-Bild des beobachteten Volumens zusammengesetzt werden.

Grundsätzlich kann eine Fokustiefe oder Schärfentiefe der linienförmigen Beleuchtung unveränderlich sein. Bevorzugt wird die Fokustiefe der linienförmigen Beleuchtung auf einen Wert eingestellt, der einem axialen Abstand von zwei Probenebenen, insbesondere, wenn mehr als zwei Probenebenen gleichzeitig abgebildet werden, dem Abstand der beiden axial außen liegenden Probenebenen, entspricht, die zu der Ebene der Sensorfläche der Kamera optisch konjugiert sind. Dieses ist insbesondere für Volumenscans zweckmäßig wo ein optimales Verhältnis zwischen Bildqualität und Lichtbelastung der Probe erwünscht ist.

Neben einfachen gaußartigen Beleuchtungsprofilen können auch komplexere Strahlformungen verwendet werden. Zum Beispiel können mit diffraktiven optischen Elementen mehrere Foki erzeugt werden.

Um eine Punktverwaschungsfunktion axial abzutasten, sollte der axiale Abstand der beobachteten Probenebenen nicht größer sein als die halbe axiale Schärfentiefe der Abbildung des Mikroskopobjektivs im Detektionsstrahlengang. Das wird auch als axiales Nyquist-Sampling bezeichnet. Wenn man davon ausgeht, dass bei Volumenscans der axiale Abstand der Probenebenen größer ist als die axiale Schrittweite, ergibt sich daraus die Anforderung, dass die axiale Schrittweite, insbesondere der Einstellung des Abstands zwischen der Probe und dem Mikroskop, kleiner gewählt wird als die halbe axiale Schärfentiefe der Abbildung des Mikroskopobjektivs im Detektionsstrahlengang. Grundsätzlich ist aber auch möglich, dass der axiale Abstand der zu den Teilbildern gehörenden Probenebenen kleiner ist als oder gleich groß ist wie die Schärfentiefe der Abbildung des Mikroskopobjektivs im Detektionsstrahlengang. Die axiale Schrittweite kann dann entsprechend größer sein. Eine die axiale Nyquist-Bedingung nicht erfüllende Anwendung der Erfindung, also ein Untersampling, ist überdies natürlich auch möglich. Dieses kann beispielsweise erwünscht sein, wenn schnelle Volumenscans durchgeführt werden sollen.

Bei einer bevorzugten Variante des erfindungsgemäßen Verfahrens ist bei Volumenscans ein axialer Abstand der zu den Teilbildern gehörenden Probenebenen ein ganzzahliges Vielfaches der axialen Schrittweite. Bis auf die Ebenen an den axialen Grenzen des abgetasteten Volumens werden von den Probenebenen dann jeweils mehrere Bilder aufgenommen, und zwar entsprechend der durch die Bildteilereinheit definierten Anzahl der Teilbilder. Diese Wahl der Schrittweite erlaubt auch jeweils ein Überprüfen des korrekten Anschlusses des jeweils folgenden Bildstapels.

Bei einer anderen Variante des erfindungsgemäßen Verfahrens ist bei Volumenscans eine axiale Schrittweite ein ganzzahliges Vielfaches des axialen Abstands der zu den Teilbildern gehörenden Probenebenen. Beispielsweise kann die axiale Schrittweite ein n-faches des axialen Abstands der zu den Teilbildern gehörenden Probenebenen sein, wobei n die Anzahl der Probenebenen und der Teilbilder ist. Mit dieser Wahl der axialen Schrittweite sind rasche Volumenscans möglich.

Mischformen dieser Varianten sind möglich. Vorteilhaft ist, dass die axialen Abstände der Probenebenen und die axiale Schrittweite bei Volumenscans über weite Bereiche frei gewählt werden können.

Weitere Steigerungen der Bild- und Volumenraten sind möglich, wenn die Probe mit mehreren linienförmigen Beleuchtungsbereichen abgetastet wird und die den linienförmigen Beleuchtungsbereichen entsprechenden Bereiche der Sensorfläche der Kamera jeweils synchronisiert ausgelesen werden.

In der Regel wird das Anregungslicht parallel zur optischen Achse des Beleuchtungsobjektivs auf die Probe eingestrahlt. Bei bestimmten Proben kann aber auch bevorzugt sein, dass eine linienförmige Laserbeleuchtung unter einem Winkel zur optischen Achse des Beleuchtungsobjektivs in die Probe eingestrahlt wird. Die den Teilbildern entsprechenden Probenbereiche sind dann lateral gegeneinander verschoben. Die abgetasteten Volumina können dann im Wesentlichen einem Parallelepiped entsprechen.

Weitere Vorteile und Eigenschaften der vorliegenden Erfindung werden im Zusammenhang mit den beigefügten Figuren erläutert. Darin zeigt:
- Figur 1:: eine schematische Darstellung eines Ausführungsbeispiels eines erfindungsgemäßen Mikroskops;
- Figur 2:: in schematischer Darstellung eine Skizze der Beleuchtungssituation in einer Probe; und
- Figur 3:: eine schematische Darstellung der Sensorfläche der Kamera mit zwei Teilbildern, korrespondierend zu einer je verschiedenen z-Tiefe innerhalb der Probe.

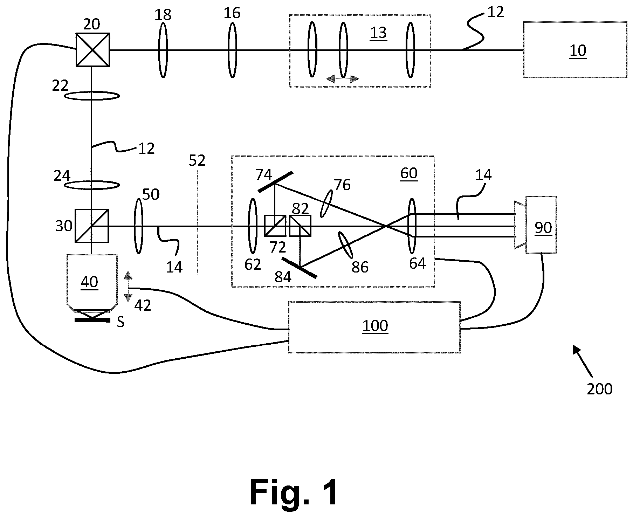

Gleiche und gleichwirkende Komponenten sind in den Figuren in der Regel mit denselben Bezugszeichen gekennzeichnet. Ein Ausführungsbeispiel eines erfindungsgemäßen Mikroskops 200 wird mit Bezug auf die Figuren 1 bis 3 erläutert.

Das in Figur 1 schematisch dargestellte erfindungsgemäße Mikroskops 200 weist als wesentliche Komponenten einen Beleuchtungsstrahlengang, einen Detektionsstrahlengang und eine Steuereinheit 100, beispielsweise einen PC, auf.

Der Beleuchtungsstrahlengang dient zum Beleuchten und Abtasten einer Probe S mit Anregungslicht 12 und beinhaltet im gezeigten Beispiel neben anderen Komponenten einen Scanner 20 als Beleuchtungssteuerungseinrichtung und ein Beleuchtungsobjektiv 40. Infolge der Bestrahlung mit dem Anregungslicht 12 sendet die Probe S Emissionslicht 14 aus, welches über den Detektionsstrahlengang auf eine Sensorfläche 98 einer Kamera 90 abgebildet wird. Der Detektionsstrahlengang beinhaltet neben anderen Komponenten das Mikroskopobjektiv 40, dass im gezeigten Beispiel identisch ist mit dem Beleuchtungsobjektiv 40, und, als wesentlichen Bestandteil des erfindungsgemäßen Mikroskops, die Bildteilereinheit 60. Die Bildteilereinheit 60 dient dazu, das von der Probe S kommende Emissionslicht 14 aufzuteilen und in qualifizierter Weise auf eine Sensorfläche 98 der Kamera abzubilden. Die Kamera 90 dient zum Aufnehmen von Bildern der Probe S. Die Steuereinheit 100 dient zum Ansteuern mindestens des Scanners 20 und der Kamera 90.

Der Beleuchtungsstrahlengang kann durch den Beleuchtungsstrahlengang eines Laser-Scanning-Mikroskops verwirklicht sein.

Das Anregungslicht 12 wird durch einen Laser 10 in den Beleuchtungsstrahlengang eingespeist und mit dem Scanner 20 durch das Mikroskopobjektiv 40 über die Probe S gescannt. Die Abbildung des Scanners 20, beispielsweise des Scanspiegels oder der Scanspiegel, in eine rückseitige Brennebene des Beleuchtungsobjektivs 40 (Pupillenebene) erfolgt über ein Linsensystem aus Scanoptik 22 und Tubuslinse 24. Mit einer Zylinderoptik, insbesondere einer Zylinderlinse 18, wird bevorzugt eine linienförmige Verteilung des Anregungslichts 12 in der Pupillen- und einer Probenebene erzeugt. Wegen der Fourierrelation zwischen Pupillen- und Bildebene stehen diese senkrecht zueinander.

Ergänzend oder alternativ kann zum Erzeugen einer linienförmigen Verteilung des Anregungslichts 12 eine Zylinderlinse auf der beleuchtungsseitigen Eintrittsseite des Hauptstrahlteilers 30, der unten beschrieben wird, vorhanden sein.

In dem gezeigten Ausführungsbeispiel ist außerdem eine, zuschaltbare oder austauschbare, beispielsweise einschwenkbare, zweite Zylinderoptik, beispielsweise eine Zylinderlinse 16, vorhanden zum Einstellen einer Breite des Linienfokus.

Im gezeigten Ausführungsbeispiel ist im Beleuchtungsstrahlengang außerdem eine Zoomoptik 13 vorhanden, mit welcher eine Fokustiefe oder Schärfentiefe der Linienbeleuchtung in der Probe S eingestellt werden kann. Ergänzend oder alternativ kann im Beleuchtungsstrahlengang zum Einstellen der Fokustiefe der Beleuchtung eine in Figur 1 nicht dargestellte Abblendeinrichtung vorhanden sein.

Der Linienfokus wird durch den Scanner 20 in einer Richtung quer zur Erstreckungsrichtung des Linienfokus in der Probe S bewegt. Gegebenenfalls kann zum Scannen des Anregungslichts 12 in einer Richtung parallel zur Linienbeleuchtung ein zweiter Scanner als Teil der Beleuchtungssteuerungseinrichtung vorhanden sein.

Ein Abstand zwischen dem Mikroskopobjektiv 40 und der Probe S kann im gezeigten Ausführungsbeispiel mit einer Verschiebeeinrichtung 42, beispielsweise einem motorischen z-Trieb, eingestellt werden.

Das in der Probe S aufgrund der Bestrahlung mit dem Anregungslicht 12 erzeugte Emissionslicht 14, insbesondere Fluoreszenzlicht, wird durch das Mikroskopobjektiv 40 kollimiert und mit dem Hauptfarbteiler 30, einem dichroitischen Strahlteiler, in dem Detektionsstrahlengang in Richtung der Kamera 90 abgelenkt. Das Emissionslicht 14, also das Fluoreszenzlicht, läuft mithin nicht über den Scanner 20.

An eine Zwischenbildebene 52 strahlabwärts von einer Tubuslinse 50 schließt sich die Bildteilereinheit 60 an, die im gezeigten Ausführungsbeispiel drei Teilbilder aus unterschiedlichen Tiefenbereichen der Probe S erzeugt und diese nebeneinander auf der Sensorfläche 98 der Kamera 90, beispielsweise einem CMOS-Chip oder einem SPAD-Array, anordnet. Die Kamera 90 kann auch eine farbauflösende Kamera sein.

Über die Steuereinheit 100 sind die Kamera 90, der Scanner 20 und die Verschiebeinrichtung 42 wirkungsmäßig miteinander verbunden.

Die Steuereinheit 100 ist insbesondere dazu eingerichtet, die durch eine Stellung des Scanners 20 definierte Position der Linienbeleuchtung in der Probe S mit den jeweils auszulesenden Bereichen der Sensorfläche 98 der Kamera 90, etwa in der Art eines Rolling-Shutters, zu synchronisieren. Die Steuereinheit 100 kann auch zum Steuern der Verschiebeeinrichtung 42, insbesondere abgestimmt auf die Ansteuerung des Scanners 20, eingerichtet sein.

In dem in Figur 1 gezeigten Ausführungsbeispiel ist die Bildteilereinheit 60 im Detektionsstrahlengang zwischen einem Zwischenbild 52 strahlabwärts von einer Tubuslinse 50 und der Kamera 90 angeordnet.

Die Bildteilereinheit 60 weist ein optisches Relay-Linsensystem mit einer Eintrittslinse 62 und einer Austrittslinse 64 auf, welches die Zwischenbildebene 52 auf die Sensorfläche 98 der Kamera 90 abbildet. Eine Vergrößerung des Relay-Linsensystems kann dabei so gewählt sein, dass eine gewünschte Anzahl an Teilbildern, im Ausführungsbeispiel der Figur 1 sind das drei Teilbilder, so auf die Sensorfläche 98 abgebildet werden, dass Punktverwaschungsfunktionen lateral abgetastet werden können. Damit ist gemeint, dass die Vergrößerung des Relay-Linsensystems 62, 64 der Bildteilereinheit 60 beispielsweise so gewählt ist, dass der Durchmesser eines Airy-Scheibchens auf der Sensorfläche 98 der Kamera 90 mindestens viermal so groß ist wie ein Abstand von benachbarten Pixeln der Kamera 90. Gegebenenfalls kann in der Zwischenbildebene 52 eine Feldblende vorhanden sein, um ein Überlappen der Teilbilder auf der Sensorfläche der Kamera 98 zu vermeiden.

Zwischen der Eintrittslinse 62 und der Austrittslinse 64 des Relay-Linsensystems sind im gezeigten Ausführungsbeispiel Strahlteiler 72, 82 vorhanden, die das Emissionslicht 14 in einen ersten, einen zweiten und einen dritten Teilstrahlengang aufteilen.

Im ersten Teilstrahlengang gelangt das Emissionslicht 14 vom Strahlteiler 72 über einen verstellbaren Spiegel 74 und eine Linse 76 auf die Austrittslinse 64 und wird von dieser in ein erstes Teilbild 91 auf die Sensorfläche 98 der Kamera 90 abgebildet.

Im zweiten Teilstrahlengang gelangt das Emissionslicht 14 vom Strahlteiler 82 über einen verstellbaren Spiegel 84 und eine Linse 86 auf die Austrittslinse 64 und wird von dieser in ein zweites Teilbild 92 auf die Sensorfläche 98 der Kamera 90 abgebildet.

In dem dritten Teilstrahlengang durchläuft das Emissionslicht 14 beide Strahlteiler 72, 82, gelangt direkt zur Austrittslinse 64 und von dieser auf ein drittes Teilbild auf der Sensorfläche 98 der Kamera 90.

Der Neutralteiler 82 könnte im gezeigten Ausführungsbeispiel auch ein einfacher Spiegel sein. Dann würden der dritte Teilstrahlengang und entsprechend das dritte Teilbild entfallen.

Die Steuereinheit 100 kann dazu eingerichtet sein, die verstellbaren Spiegel 74, 84 unter Verwendung eines Steuersignals für die Kamera 90 anzusteuern dergestalt, dass eine konfokale Bedingung für alle Teilbilder der jeweiligen Ebenen durch den konfokalen Auslesebereich erfüllt ist.

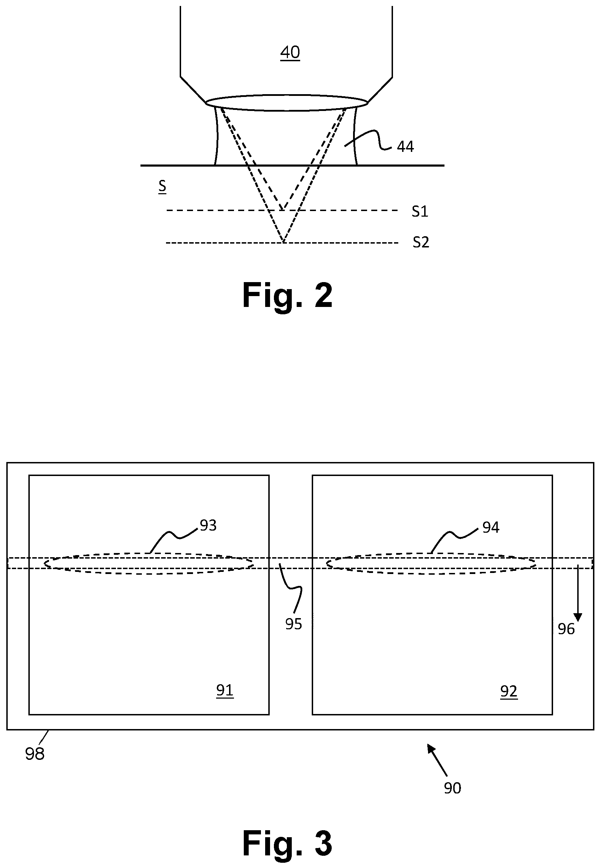

Der erste Teilstrahlengang und der zweite Teilstrahlengang sind der Austrittslinse 64 des Relay-Linsensystems 62, 64 so zugeführt, dass die zugehörigen mindestens zwei Teilbilder 91, 92 nebeneinander auf der Sensorfläche 98 der Kamera 90 dergestalt angeordnet sind, dass linienförmige Bereiche 93, 94 in den Teilbildern 91, 92, die optisch konjugiert sind zu linienförmig beleuchteten Bereichen auf oder in der Probe S, auf derselben Zeile oder denselben Zeilen 95 der Sensorfläche 98 liegen (Figur 3).

Zusätzlich können in Figur 1 nicht gezeigte Umlenkelemente oder Glasblöcke im ersten und/oder zweiten Teilstrahlengang vorhanden sein, um die Pupillenlagen für die Teilbilder abzugleichen.

Durch die Linse 76 im ersten Teilstrahlengang ist die axiale Lage einer Ebene S1 in der Probe S definiert, die zur Ebene der Sensorfläche 98 optisch konjugiert ist. Durch die Linse 86 im zweiten Teilstrahlengang ist die axiale Lage einer Ebene S2 in der Probe S definiert, die zur Ebene der Sensorfläche 98 optisch konjugiert ist. Durch geeignete Wahl der Linsen 76 und 86 können demgemäß die axialen Lagen der Probenebenen S1, und S2, die zur Ebene der Sensorfläche 98 optisch konjugiert sind eingestellt werden. Bevorzugt wird, insbesondere für Volumenscans, ein gewisser axialer Abstand für die Probenebenen S1, und S2 eingestellt. Zweckmäßig kann dann außerdem mit der Zoomoptik 13 eine Fokustiefe der Beleuchtung mit dem Anregungslicht 12 so eingestellt werden, dass die beiden Probenebenen hinreichend, angrenzende Bereiche aber möglichst wenig mit dem Anregungslicht 12 bestrahlt werden. Die Einstellung der Fokustiefe soll bewirken, dass die angrenzenden Bereiche eine geringe Beleuchtungsdichte aufweisen, also eine größere Fläche beleuchtet wird. Dieses würde erreicht, wenn die am weitesten voneinander entfernt liegenden gleichzeitig betrachteten Probenebenen gerade noch innerhalb der Fokustiefe der Beleuchtung liegen, wie im nächsten Absatz beschrieben.

Bevorzugt wird die Fokustiefe der linienförmigen Beleuchtung eingestellt auf einen Wert, der einem axialen Abstand von zwei Probenebenen S1, S2 entspricht, die zu der Ebene der Sensorfläche 98 der Kamera 90 optisch konjugiert sind.

Vorteilhafterweise ist die Brennweite der Linsen 76, 86 einstellbar, indem entweder die Linsen austauschbar sind oder beispielsweise als elektrisch einstellbare Linsen (electrically tunable lens, ETL) ausgeführt sind, deren Brennweite dann auch mit der Steuereinheit 100 einstellbar ist. Der Abstand der zur Kamerabildebene konjugierten Probenebenen S1, S2 zu einer Fokusebene des Mikroskopobjektivs 40 kann so eingestellt werden.

Die einstellbaren Linsen 76, 86 sind bevorzugt insbesondere auch so einstellbar, dass die Probenebenen S1 und S2 axial nicht beanstandet sind. Beispielsweise kann für beide Linsen 76, 78 die Brennweite auf unendlich gestellt werden. Mit der in Figur 1 gezeigten Anordnung würden dann das erste Teilbild 91 und das zweite Teilbild 92 idealerweise identisch sein.

Zweckmäßig können dann die Strahlteiler 72 und 82 durch unterschiedliche dichroitische Strahlteiler ersetzt werden, die auf die Beobachtung chromatisch unterschiedlicher Farbstoffe abgestimmt sind. Beispielsweise kann im ersten Teilbild 91 schwerpunktmäßig ein erster Farbstoff und im zweiten Teilbild 92 schwerpunktmäßig ein zweiter Farbstoff dargestellt werden. Die Probe S wird also in zwei Farbkanälen simultan beobachtet, wobei nach wie vor die Linienbeleuchtung mit dem Rolling-Shutter der Kamera 90 synchronisiert über die Probe S geführt wird.

Die Probe S kann beispielsweise ein Zellverbund mit einer Dicke von etwa 15 um sein. Das Mikroskopobjektiv 40 kann beispielsweise ein Objektiv 40x/1.2 sein. Die Schärfentiefe der Abbildung beträgt dann ca. 0,5 µm, so dass axiales Nyquist- Sampling mit einer Schrittweite von 0,25 µm erreicht wird. Anstatt zweier Teilbilder, wie in den Figuren gezeigt, können beispielsweise auch drei Teilbilder gleichzeitig aufgenommen werden. Der axiale Abstand der drei Probenebenen kann beispielsweise auf 2,5 µm eingestellt werden, d.h. dass die äußeren Probenebenen axial 5 µm beabstandet sind. Ein axialer Hub von 5 µm kann dann gleichmäßig durchfahren werden in Schritten von 0,25 µm Schritten, ohne dass unterschiedlich große Sprünge mit eventuell unterschiedlichen Zeitverzögerungen notwendig sind. Die Anzahl der aufzunehmenden Bilder würde um einen Faktor drei auf nur 20 Bilder reduziert werden. Bei einer Bildwiederholrate der Kamera von 120 fps (frames per second = Bilder pro Sekunde) würden demnach sechs Volumen pro Sekunde aufgenommen. Vorteilhaft ist hierbei, dass es eine Überdeckung der je ersten und letzten Ebene in den Bereichen gibt, die im Inneren der Probe liegen (siehe Figur 2). Hierdurch kann ein korrekter Anschluss der Bildaufnahmen sichergestellt werden.

Weiterhin bevorzugt ist eine geregelte Ablage der Teilbilder 91, 92 auf der Kamera 90. Hierbei kann, ausgehend vom Signal auf der Sensorfläche 98 der Kamera 90, in der Steuereinheit 100 nach festgelegten Kriterien eine Ansteuerung der, insbesondere motorisch verstellbaren, Umlenkspiegel 74, 84 realisiert werden, die dafür sorgt, dass die abgelegten Teilbilder 91, 92 sich nicht überschneiden und außerdem so nebeneinander liegen, dass der Bereich der konfokalen Auslesung mit dem Beleuchtungsbereich optimal überlappt.

Figur 2 zeigt eine schematische Darstellung des Mikroskopobjektivs 40 relativ zur Probe S. Zwischen dem Mikroskopobjektiv 40 und der Probe S befindet sich ein Immersionsmedium zur Anpassung der Brechungsindizes. Dargestellt sind sodann zwei Probenebenen S1 und S2. Die erste Probenebene S1 ist über den ersten Teilstrahlengang, der über die Komponenten 62, 72, 74, 76, 64 verläuft, optisch konjugiert zum ersten Teilbild 91 (Figur 3). Die zweite Probenebene S2 ist über den zweiten Teilstrahlengang, der über die Komponenten 62, 82, 84, 86, 64 verläuft, optisch konjugiert zum zweiten Teilbild 92 (Figur 1, Figur 3). Eine Ausdehnung der axialen Verteilung des Anregungslichts 12 entspricht etwa dem axialen Abstand der Probenebenen S1 und S2.

Figur 3 zeigt eine schematische Darstellung der Sensorfläche 98 der Kamera 90. Das zum ersten Teilstrahlengang gehörende erste Teilbild, welches ein Bild der Probenebene S1 ist, liegt, wie ersichtlich, neben dem zum zweiten Teilstrahlengang gehörenden zweiten Teilbild 92, welches ein Bild der Probenebene S2 ist. Ein linienförmiger Bereich 93 im ersten Teilbild 91 entspricht einem Bereich, der optisch konjugiert ist zu der Lage der Linienbeleuchtung in der ersten Probenebene S1. Ein linienförmiger Bereich 94 im zweiten Teilbild 92 entspricht einem Bereich, der optisch konjugiert ist zu der Lage der Linienbeleuchtung in der zweiten Probenebene S2. Wie ersichtlich, liegen das erste Teilbild 91 und das zweite Teilbild 92 auf der Sensorfläche 98 so nebeneinander, dass die linienförmigen Bereiche 93, 94 in den Teilbildern 91, 92, die optisch konjugiert sind zu linienförmig beleuchteten Bereichen auf oder in der Probe S, auf derselben Zeile oder denselben Zeilen 95 der Sensorfläche 98 liegen. Die Steuereinheit 100 ist dazu eingerichtet, die von den in der Zeile oder den Zeilen 95 liegenden Pixeln gemessenen Messsignale auszulesen und auszuwerten. Mit der Bewegung des Linienfokus in der Probe S mithilfe des Scanners 20 quer zur Erstreckungsrichtung des Linienfokus wird auch der jeweils auszulesende Bereich der Sensorfläche 98 der Kamera 90 in Richtung des Pfeils 96 mitgeführt.

### Bezugszeichenliste

- 10: Lichtquelle, insbesondere Laser
- 12: Anregungslicht
- 13: Zoomoptik zum Einstellen der Fokustiefe der Beleuchtung
- 14: Emissionslicht
- 16: Zylinderlinse, insbesondere einschwenkbar
- 18: Zylinderlinse, insbesondere einschwenkbar
- 20: Beleuchtungssteuerungseinrichtung, z.B. Galvo-Scanner
- 22: Scanoptik
- 24: Tubuslinse im Beleuchtungsstrahlengang
- 30: Hauptfarbteiler
- 40: Beleuchtungsobjektiv, Mikroskopobjektiv
- 42: steuerbare Verschiebeeinrichtung
- 44: Immersionsflüssigkeit (optional, abhängig vom Objektiv 40)
- 50: Tubuslinse im Detektionsstrahlengang
- 52: Zwischenbildebene
- 60: Bildteilereinheit
- 62: Eintrittslinse
- 64: Austrittslinse
- 72: Strahlteiler, insbesondere Neutralteiler
- 74: Umlenkeinrichtung, insbesondere Spiegel, insbesondere steuerbar
- 76: Linse, insbesondere mit einstellbarer Brennweite
- 82: Strahlteiler, insbesondere Neutralteiler
- 84: Umlenkeinrichtung, insbesondere Spiegel, insbesondere steuerbar
- 86: Linse, insbesondere mit einstellbarer Brennweite
- 90: Kamera
- 91: erstes Teilbild
- 92: zweites Teilbild
- 93: linienförmiger Bereich, korrespondierend mit und optisch konjugiert zu linienförmigem beleuchteten Bereich auf oder in Probe S
- 94: linienförmiger Bereich, korrespondierend mit und optisch konjugiert zu linienförmigem beleuchteten Bereich auf oder in der Probe S
- 95: eine oder mehrere auszulesende Zeilen der Sensorfläche 98
- 96: Bewegungsrichtung der auszulesenden Zeile oder Zeilen
- 98: Sensorfläche der Kamera 90
- 100: Steuereinrichtung, insbesondere PC
- 200: erfindungsgemäßes Mikroskop
- S: Probe
- S1: erste Probenebene
- S2: zweite Probenebene

## Patentansprüche

1. Mikroskop
mit einem Beleuchtungsstrahlengang mindestens mit einer Beleuchtungssteuerungseinrichtung (20) und einem Beleuchtungsobjektiv (40) zum linienförmigen Beleuchten und Abtasten einer Probe (S) mit Anregungslicht (12), mit einem Detektionsstrahlengang mindestens mit einem Mikroskopobjektiv (40) zum Leiten von von der Probe (S) abgestrahltem Emissionslicht (14) in Richtung einer Kamera (90),
mit der Kamera (90) mit einer zweidimensional ortsauflösenden Sensorfläche zum Aufnehmen von Bildern der Probe (S) und
mit einer Steuereinheit (100) zum Ansteuern mindestens der Beleuchtungssteuerungseinrichtung (20) und der Kamera (90),
wobei die Steuereinheit (100) dazu eingerichtet ist, jeweils auszulesende Bereiche einer Sensorfläche (98) der Kamera (90) mit einer durch die Beleuchtungssteuerungseinrichtung (20) definierten Position des Anregungslichts (12) zu synchronisieren,
**dadurch gekennzeichnet,**
**dass** im Detektionsstrahlengang eine Bildteilereinheit (60) vorhanden ist zum Aufteilen des Emissionslichts (14) in mehrere Teilstrahlengänge, die jeweils ein Teilbild (91, 92) der Probe (S) auf der Sensorfläche (98) der Kamera (90) erzeugen, wobei die Teilbilder (91, 92) auf der Sensorfläche (98) dergestalt nebeneinander liegen, dass linienförmige Bereiche (93, 94) in den Teilbildern (91, 92), die einer durch die Beleuchtungssteuerungseinrichtung (20) definierten Position des Anregungslichts (12) auf oder in der Probe (S) entsprechen, auf derselben Zeile oder denselben Zeilen (95) der Sensorfläche (98) liegen.

2. Mikroskop nach Anspruch 1,
**dadurch gekennzeichnet,**
**dass** die linienförmigen Bereiche (93, 94) in den Teilbildern (91, 92), die auf der Sensorfläche (98) nebeneinander liegen, optisch konjugiert sind zu linienförmig beleuchteten Bereichen auf oder in der Probe (S).

3. Mikroskop nach Anspruch 1 oder 2,
**dadurch gekennzeichnet,**
**dass** im Beleuchtungsstrahlengang zum Erzeugen einer linienförmige Verteilung des Anregungslichts (12) in einer Probenebene (S1, S2) eine, insbesondere in den Beleuchtungsstrahlengang einschwenkbare, Zylinderoptik (18) vorhanden ist und/oder
**dass** im Beleuchtungsstrahlengang zum Variieren einer Breite eines Linienfokus in der Probenebene (S1, S2) eine, insbesondere in den Beleuchtungsstrahlengang einschwenkbare, zweite Zylinderoptik (16) vorhanden ist und/oder
**dass** im Beleuchtungsstrahlengang Linsen (13) und/oder Blenden zum Einstellen einer Fokustiefe der linienförmigen Beleuchtung vorhanden sind.

4. Mikroskop nach einem der Ansprüche 1 bis 3,
**dadurch gekennzeichnet,**
**dass** die Beleuchtungssteuerungseinrichtung mindestens einen Scanner (20) aufweist und insbesondere zum Scannen des Anregungslichts in einer Richtung parallel zur Linienbeleuchtung einen zweiten Scanner aufweist und/oder dass die Beleuchtungssteuerungseinrichtung mindestens ein Mikrospiegelarray aufweist.

5. Mikroskop nach einem der Ansprüche 1 bis 4,
**dadurch gekennzeichnet,**
**dass** die Bildteilereinheit (60) zum Aufteilen des Emissionslichts mindestens eine diffraktive Einrichtung, insbesondere ein Gitter und/oder einen Spatial Light Modulator, aufweist und oder
**dass** die Bildteilereinheit (60) zum Aufteilen des Emissionslichts mindestens eine monolithische Komponente aufweist, bestehend beispielsweise aus geklebten und/oder beschichteten Prismen oder Platten, und/oder dass zum Abgleich der axialen Lagen der Pupillen für die Teilstrahlengänge in der Bildteilereinheit (60) Umlenkelemente und/oder Glasblöcke vorhanden sind.

6. Mikroskop nach einem der Ansprüche 1 bis 5,
**dadurch gekennzeichnet,**
**dass** die Bildteilereinheit (60) im Detektionsstrahlengang zwischen einem Zwischenbild (52) strahlabwärts von einer Tubuslinse (50) und der Kamera (90) angeordnet ist.

7. Mikroskop nach einem der Ansprüche 1 bis 6,
**dadurch gekennzeichnet,**
**dass** die Bildteilereinheit (60) ein Relay-Linsensystem mit einer Eintrittslinse (62) und einer Austrittslinse (64) aufweist, zwischen denen mindestens ein Strahlteiler (72, 82) angeordnet ist und
**dass** insbesondere eine Vergrößerung des Relay-Linsensystems (62, 64) der Bildteilereinheit (60) so gewählt ist, dass der Durchmesser eines Airy-Scheibchens auf der Sensorfläche (98) der Kamera (90) mindestens viermal so groß ist wie ein Abstand von benachbarten Pixeln der Kamera (90).

8. Mikroskop nach Anspruch 7,
**dadurch gekennzeichnet,**
**dass** die Teilstrahlengänge der Austrittslinse (64) des Relay-Linsensystems so zugeführt sind, dass die zugehörigen mindestens zwei Teilbilder (91, 92) nebeneinander auf der Sensorfläche (98) der Kamera (90) dergestalt angeordnet sind, dass linienförmige Bereiche (93, 94) in den Teilbildern (93, 94), die insbesondere optisch konjugiert sind zu linienförmig beleuchteten Bereichen auf oder in der Probe (S), auf derselben Zeile oder denselben Zeilen (95) der Sensorfläche (98) liegen.

9. Mikroskop nach einem der Ansprüche 7 oder 8,
**dadurch gekennzeichnet,**
**dass** mindestens einer der Strahlteiler (72, 82), insbesondere mehr als einer oder jeder der Strahlteiler (72, 82), ein Neutralteiler oder ein dichroitischer Strahlteiler ist.

10. Mikroskop nach einem der Ansprüche 1 bis 9,
**dadurch gekennzeichnet,**
**dass** in mindestens einem der Teilstrahlengänge der Bildteilereinheit (60), bevorzugt in mehreren oder allen Teilstrahlengängen der Bildteilereinheit (60), insbesondere ansteuerbare, Umlenkelemente (74, 84), insbesondere Umlenkspiegel, vorhanden sind und
**dass** insbesondere die Steuereinheit (100) dazu eingerichtet ist, die ansteuerbaren Umlenkelemente (74, 84) unter Verwendung eines Steuersignals für die Kamera (90) anzusteuern dergestalt, dass eine konfokale Bedingung für alle Bilder der jeweiligen Ebenen durch den konfokalen Auslesebereich erfüllt ist.

11. Mikroskop nach einem der Ansprüche 1 bis 10,
**dadurch gekennzeichnet,**
**dass** die mindestens zwei Teilbilder (91, 92) zu axial versetzten Bereichen der Probe (S) gehören und/oder
**dass** ein axialer Abstand der Probenebenen (S1, S2), zu denen die Teilbilder (91, 92) gehören und die zur Ebene der Sensorfläche (92) optisch konjugiert sind, einstellbar ist.

12. Mikroskop nach einem der Ansprüche 1 bis 11,
**dadurch gekennzeichnet,**
**dass** in mindestens einem der Teilstrahlengänge der Bildteilereinheit (60) bevorzugt in mehreren oder allen Teilstrahlengängen der Bildteilereinheit (60), eine zusätzliche Linse (76, 86) angeordnet ist und
**dass** insbesondere eine Brennweite der mindestens einen zusätzlichen Linse (76, 86) veränderlich und insbesondere auf unendlich einstellbar ist.

13. Mikroskop nach einem der Ansprüche 1 bis 12,
**dadurch gekennzeichnet,**
**dass** die Kamera (90) eine CMOS-Kamera oder sCMOS-Kamera mit Rolling-Shutter-Elektronik oder eine SPAD-Kamera ist und/oder
**dass** die Kamera (90) eine farbauflösende Kamera ist und/oder
**dass** die Kamera (90) zum schnellen zusammenhängenden Auslesen von mehr als einem Bereich, insbesondere mehr als einer Zeile, eingerichtet ist.

14. Mikroskop nach einem der Ansprüche 1 bis 13,
**dadurch gekennzeichnet,**
**dass** die den Teilbildern (91, 92) entsprechenden Probenbereiche lateral gegeneinander verschoben sind.

15. Mikroskop nach einem der Ansprüche 1 bis 14,
**dadurch gekennzeichnet,**
**dass** zum Anpassen einer Größe der Teilbilder (91, 92) in einer Zwischenbildebene (52) im Detektionsstrahlengang eine Feldblende vorhanden ist.

16. Verfahren zur Mikroskopie,
bei dem eine Probe (S) durch ein Beleuchtungsobjektiv (40) mit Anregungslicht (12) linienförmig beleuchtet und abgetastet wird,
bei dem von der Probe (S) abgestrahltes Emissionslicht (14) über ein Mikroskopobjektiv (40) in Richtung einer eine zweidimensional ortsauflösende Sensorfläche aufweisenden Kamera (90) geleitet wird,
bei dem das Emissionslicht (14) strahlabwärts von dem Mikroskopobjektiv (40) in mehrere Teilstrahlengänge aufgeteilt wird,
bei dem jeder der Teilstrahlengänge ein Teilbild (91, 92) der Probe (S) auf einer Sensorfläche (98) der Kamera (90) erzeugt,
wobei die Teilbilder (91, 92) der Probe (S) auf der Sensorfläche (98) dergestalt nebeneinander liegen, dass linienförmige Bereiche (93, 94) in den Teilbildern (91, 92), die einer Position des Anregungslichts (12) auf oder in der Probe (S) entsprechen, auf derselben Zeile oder denselben Zeilen (95) der Sensorfläche (98) liegen und
bei dem auszulesende Bereiche der Sensorfläche (98) der Kamera (90) synchronisiert werden mit der Position des Anregungslichts (12) auf der Probe.

17. Verfahren nach Anspruch 16,
**dadurch gekennzeichnet,**
**dass** eine Fokustiefe der linienförmigen Beleuchtung eingestellt wird auf einen Wert, der einem axialen Abstand von zwei Probenebenen (S1, S2) entspricht, die zu der Ebene der Sensorfläche (98) der Kamera (90) optisch konjugiert sind.

18. Verfahren nach Anspruch 16 oder 17,
**dadurch gekennzeichnet,**
**dass** bei Volumenscans eine axiale Schrittweite kleiner ist als oder gleich groß ist wie die halbe axiale Schärfentiefe der Abbildung des Mikroskopobjektivs (40).

19. Verfahren nach einem der Ansprüche 16 bis 18,
**dadurch gekennzeichnet,**
**dass** bei Volumenscans ein axialer Abstand der zu den Teilbildern gehörenden Probenebenen (S1, S2) ein ganzzahliges Vielfaches der axialen Schrittweite ist oder
**dass** bei Volumenscans eine axiale Schrittweite ein ganzzahliges Vielfaches ist des axialen Abstands der zu den Teilbildern gehörenden Probenebenen.

## Claims

1. Microscope, comprising:
an illumination beam path at least including an illumination control device (20) and an illumination objective (40) for linearly illuminating and scanning a sample (S) with excitation light (12),
a detection beam path at least including a microscope objective (40) for guiding emission light (14), emitted by the sample (S), in the direction of a camera (90),
the camera (90) having a two-dimensionally spatially resolving sensor area for recording images of the sample (S), and
a control unit (100) for controlling at least the illumination control device (20) and the camera (90),
the control unit (100) being configured to synchronize in each case regions to be read of a sensor area (98) of the camera (90) with a position of the excitation light (12) defined by the illumination control device (20),
**characterized in that**
the detection beam path includes an image splitter unit (60) for splitting the emission light (14) into a plurality of partial beam paths which each generate a partial image (91, 92) of the sample (S) on the sensor area (98) of the camera (90), the partial images (91, 92) lying next to one another on the sensor area (98) in such a way that linear regions (93, 94) in the partial images (91, 92) which correspond to a position of the excitation light (12) on or in the sample (S) as defined by the illumination control device (20) lie on the same line or the same lines (95) of the sensor area (98).

2. Microscope according to claim 1,
**characterized in that**
the linear regions (93, 94) in the partial images (91, 92) which lie next to one another on the sensor area (98) are optically conjugate to linearly illuminated regions on or in the sample (S).

3. Microscope according to claim 1 or 2,
**characterized in that**
the illumination beam path includes a cylindrical optical unit (18) for generating a linear distribution of the excitation light (12) in a sample plane (S1, S2), said cylindrical optical unit being in particular pivotable into the illumination beam path, and/or
**in that** the illumination beam path includes a second cylindrical optical unit (16) for varying a width of a line focus in the sample plane (S1, S2), said second cylindrical optical unit being in particular pivotable into the illumination beam path, and/or
**in that** the illumination beam path includes lenses (13) and/or stops for adjusting a focus depth of the linear illumination.

4. Microscope according to any one of claims 1 to 3,
**characterized in that**
the illumination control device has at least one scanner (20) and in particular has a second scanner for scanning the excitation light in a direction parallel to the line illumination, and/or
**in that** the illumination control device has at least one micromirror array.

5. Microscope according to any one of claims 1 to 4,
**characterized in that**
the image splitter unit (60) has at least one diffractive device, in particular a grating and/or a spatial light modulator, for splitting the emission light, and/or
**in that** the image splitter unit (60) has at least one monolithic component, consisting for example of adhesively bonded and/or coated prisms or plates, for splitting the emission light, and/or
**in that** deflection elements and/or glass blocks for adjusting the axial poses of the pupils for the partial beam paths are present in the image splitter unit (60).

6. Microscope according to any one of claims 1 to 5,
**characterized in that**
the image splitter unit (60) is arranged in the detection beam path between an intermediate image (52) downstream of a tube lens (50) and the camera (90).

7. Microscope according to any one of claims 1 to 6,
**characterized in that**
the image splitter unit (60) has a relay lens system comprising an entrance lens (62) and an exit lens (64), between which at least one beam splitter (72, 82) is arranged, and
**in that** in particular a magnification of the relay lens system (62, 64) of the image splitter unit (60) is chosen such that the diameter of an Airy disk on the sensor area (98) of the camera (90) is at least four times the magnitude of a distance between adjacent pixels of the camera (90).

8. Microscope according to claim 7,
**characterized in that**
the partial beam paths are fed to the exit lens (64) of the relay lens system such that the associated at least two partial images (91, 92) are arranged next to one another on the sensor area (98) of the camera (90) in such a way that linear regions (93, 94) in the partial images (93, 94) which in particular are optically conjugate to linearly illuminated regions on or in the sample (S) lie on the same line or the same lines (95) of the sensor area (98).

9. Microscope according to any one of claims 7 or 8,
**characterized in that**
at least one of the beam splitters (72, 82), in particular more than one or each of the beam splitters (72, 82), is a neutral splitter or a dichroic beam splitter.

10. Microscope according to any one of claims 1 to 9,
**characterized in that**,
in particular controllable, deflection elements (74, 84), in particular deflection mirrors, are present in at least one of the partial beam paths of the image splitter unit (60), preferably in a plurality or all of the partial beam paths of the image splitter unit (60), and
**in that** in particular the control unit (100) is configured to control the controllable deflection elements (74, 84) using a control signal for the camera (90) in such a way as to satisfy a confocal condition for all images of the respective planes by way of the confocal readout region.

11. Microscope according to any one of claims 1 to 10,
**characterized in that**
the at least two partial images (91, 92) belong to axially offset regions of the sample (S), and/or
**in that** an axial distance between the sample planes (S1, S2), to which the partial images (91, 92) belong and which are optically conjugate to the plane of the sensor area (92), is adjustable.

12. Microscope according to any one of claims 1 to 11,
**characterized in that**
an additional lens (76, 86) is arranged in at least one of the partial beam paths of the image splitter unit (60), preferably in a plurality or all of the partial beam paths of the image splitter unit (60), and
**in that** in particular a focal length of the at least one additional lens (76, 86) is adjustable in a variable manner and in particular to infinity.

13. Microscope according to any one of claims 1 to 12,
**characterized in that**
the camera (90) is a CMOS camera or sCMOS camera with rolling shutter electronics or a SPAD camera, and/or
**in that** the camera (90) is a color resolution camera, and/or
**in that** the camera (90) is configured for rapid continuous readout of more than one region, in particular more than one line.

14. Microscope according to any one of claims 1 to 13,
**characterized in that**
the sample regions corresponding to the partial images (91, 92) are displaced laterally relative to one another.

15. Microscope according to any one of claims 1 to 14,
**characterized in that**
the detection beam path includes a field stop for adapting a size of the partial images (91, 92) in an intermediate image plane (52).

16. Method for microscopy,
in which a sample (S) is linearly illuminated and scanned with excitation light (12) by an illumination objective (40),
in which emission light (14) emitted by the sample (S) is guided via a microscope objective (40) in the direction of a camera (90) having a two-dimensionally spatially resolving sensor area,
in which the emission light (14) is split into a plurality of partial beam paths downstream of the microscope objective (40),
in which each of the partial beam paths generates a partial image (91, 92) of the sample (S) on a sensor area (98) of the camera (90),
the partial images (91, 92) of the sample (S) lying next to one another on the sensor area (98) in such a way that linear regions (93, 94) in the partial images (91, 92) which correspond to a position of the excitation light (12) on or in the sample (S) lie on the same line or the same lines (95) of the sensor area (98), and
in which regions to be read of the sensor area (98) of the camera (90) are synchronized with the position of the excitation light (12) on the sample.

17. Method according to claim 16,
**characterized in that**
a focus depth of the linear illumination is adjusted to a value corresponding to an axial distance between two sample planes (S1, S2) which are optically conjugate to the plane of the sensor area (98) of the camera (90).

18. Method according to claim 16 or 17,
**characterized in that**
in the case of volume scans an axial step size is less than or equal to half the axial depth of focus of the imaging of the microscope objective (40).

19. Method according to any one of claims 16 to 18,
**characterized in that**
in the case of volume scans an axial distance between the sample planes (S1, S2) belonging to the partial images is an integral multiple of the axial step size, or
**in that** in the case of volume scans an axial step size is an integral multiple of the axial distance between the sample planes belonging to the partial images.

## Revendications

1. Microscope comprenant :
un trajet de faisceau d'éclairage au moins avec un dispositif de commande d'éclairage (20) et un objectif d'éclairage (40) pour l'éclairage linéaire et le balayage d'un échantillon (S) avec une lumière d'excitation (12),
un trajet de faisceau de détection au moins avec un objectif de microscope (40) pour diriger une lumière d'émission (14) émise par l'échantillon (S) en direction d'une caméra (90),
la caméra (90) avec une surface de capteur à résolution spatiale bidimensionnelle pour l'acquisition d'images de l'échantillon (S) et
une unité de commande (100) pour commander au moins le dispositif de commande d'éclairage (20) et la caméra (90),
dans lequel l'unité de commande (100) est conçue pour synchroniser les zones respectivement à lire d'une surface de capteur (98) de la caméra (90) avec une position de la lumière d'excitation (12) définie par le dispositif de commande d'éclairage (20),
**caractérisé en ce**
**qu'**une unité de division d'image (60) est présente dans le trajet de faisceau de détection pour diviser la lumière d'émission (14) en plusieurs trajets de faisceau partiels, qui produisent respectivement une image partielle (91, 92) de l'échantillon (S) sur la surface de capteur (98) de la caméra (90), dans lequel les images partielles (91, 92) se situent les unes à côté des autres sur la surface de capteur (98) de sorte que des zones linéaires (93, 94) dans les images partielles (91, 92), qui correspondent à une position de la lumière d'excitation (12) sur ou dans l'échantillon (S) définie par le dispositif de commande d'éclairage (20), se situent sur la même ligne ou les mêmes lignes (95) de la surface de capteur (98).

2. Microscope selon la revendication 1,
**caractérisé en ce**
**que** les zones linéaires (93, 94) dans les images partielles (91, 92), qui se situent les unes à côté des autres sur la surface de capteur (98), sont conjuguées optiquement aux zones éclairées linéairement sur ou dans l'échantillon (S).

3. Microscope selon la revendication 1 ou 2,
**caractérisé en ce**
**qu'**une optique cylindrique (18), en particulier pouvant pivoter dans le trajet de faisceau d'éclairage, est présente dans le trajet de faisceau d'éclairage pour produire une répartition linéaire de la lumière d'excitation (12) dans un plan d'échantillon (S1, S2) et/ou
**qu'**une deuxième optique cylindrique (16), en particulier pouvant pivoter dans le trajet de faisceau d'éclairage, est présente dans le trajet de faisceau d'éclairage pour modifier une largeur d'un foyer linéaire dans le plan d'échantillon (S1, S2) et/ou
**que** des lentilles (13) et/ou diaphragmes pour régler une profondeur de foyer de l'éclairage linéaire sont présents dans le trajet de faisceau d'éclairage.

4. Microscope selon l'une quelconque des revendications 1 à 3,
**caractérisé en ce**
**que** le dispositif de commande d'éclairage présente au moins un scanner (20) et présente en particulier un deuxième scanner pour le balayage de la lumière d'excitation dans une direction parallèle à l'éclairage linéaire et/ou
**que** le dispositif de commande d'éclairage présente au moins une matrice de micromiroirs.

5. Microscope selon l'une quelconque des revendications 1 à 4,
**caractérisé en ce**
**que** l'unité de division d'image (60) pour diviser la lumière d'émission présente au moins un dispositif diffractif, en particulier un réseau et/ou un modulateur spatial de lumière, et/ou
**que** l'unité de division d'image (60) pour diviser la lumière d'émission présente au moins un composant monolithique, constitué par exemple de prismes ou plaques collé (e) et/ou revêtu(e)s, et/ou
**que** des éléments de renvoi et/ou blocs de verre sont présents pour l'ajustement des situations axiales des pupilles pour les trajets de faisceau partiels dans l'unité de division d'image (60).

6. Microscope selon l'une quelconque des revendications 1 à 5,
**caractérisé en ce**
**que** l'unité de division d'image (60) est disposée dans le trajet de faisceau de détection entre une image intermédiaire (52) en aval d'une lentille de tube (50) et la caméra (90).

7. Microscope selon l'une quelconque des revendications 1 à 6,
**caractérisé en ce**
**que** l'unité de division d'image (60) présente un système de lentilles de relais avec une lentille d'entrée (62) et une lentille de sortie (64), entre lesquelles est disposé au moins un séparateur de faisceau (72, 82) et
**qu'**en particulier un agrandissement du système de lentilles de relais (62, 64) de l'unité de division d'images (60) est choisi de sorte que le diamètre d'un disque d'Airy sur la surface de capteur (98) de la caméra (90) est au moins quatre fois plus grand qu'une distance entre des pixels adjacents de la caméra (90).

8. Microscope selon la revendication 7,
**caractérisé en ce**
**que** les trajets de faisceau partiels sont amenés à la lentille de sortie (64) du système de lentilles de relais de sorte que les au moins deux images partielles (91, 92) associées sont disposées l'une à côté de l'autre sur la surface de capteur (98) de la caméra (90), de telle sorte que des zones linéaires (93, 94) dans les images partielles (93, 94), qui en particulier sont conjuguées optiquement aux zones éclairées linéairement sur ou dans l'échantillon (S), se situent sur la même ligne ou les mêmes lignes (95) de la surface de capteur (98).

9. Microscope selon l'une quelconque des revendications 7 ou 8,
**caractérisé en ce**
**qu'**au moins un des séparateurs de faisceau (72, 82), en particulier plus d'un ou chacun des séparateurs de faisceau (72, 82), est un séparateur neutre ou un séparateur de faisceau dichroïque.

10. Microscope selon l'une quelconque des revendications 1 à 9,
**caractérisé en ce**
**que** des éléments de renvoi (74, 84), en particulier des miroirs de renvoi, en particulier pouvant être commandés, sont présents dans au moins un des trajets de faisceau partiels de l'unité de division d'image (60), de préférence dans plusieurs ou tous les trajets de faisceau partiels de l'unité de division d'image (60), et
**qu'**en particulier l'unité de commande (100) est conçue pour commander les éléments de renvoi (74, 84) pouvant être commandés au moyen d'un signal de commande pour la caméra (90), de telle sorte qu'une condition confocale pour toutes les images des plans respectifs est remplie par la zone de lecture confocale.

11. Microscope selon l'une quelconque des revendications 1 à 10,
**caractérisé en ce**
**que** les au moins deux images partielles (91, 92) font partie de zones axialement décalées de l'échantillon (S) et/ou
**qu'**une distance axiale entre les plans d'échantillon (S1, S2), dont font partie les images partielles (91, 92) et qui sont conjugués optiquement au plan de la surface de capteur (92), est réglable.

12. Microscope selon l'une quelconque des revendications 1 à 11,
**caractérisé en ce**
**qu'**une lentille (76, 86) supplémentaire est disposée dans au moins un des trajets de faisceau partiels de l'unité de division d'image (60) de préférence dans plusieurs ou tous les trajets de faisceau partiels de l'unité de division d'image (60) et
**qu'**en particulier une distance focale de l'au moins une lentille (76, 86) supplémentaire est variable et en particulier réglable sur infini.

13. Microscope selon l'une quelconque des revendications 1 à 12,
**caractérisé en ce**
**que** la caméra (90) est une caméra CMOS ou caméra sCMOS avec une électronique à obturateur rotatif ou une caméra SPAD et/ou
**que** la caméra (90) est une caméra à résolution des couleurs et/ou
**que** la caméra (90) est conçue pour la lecture continue rapide de plus d'une zone, en particulier plus d'une ligne.

14. Microscope selon l'une quelconque des revendications 1 à 13,
**caractérisé en ce**
**que** les zones d'échantillon correspondant aux images partielles (91, 92) sont déplacées latéralement les unes par rapport aux autres.

15. Microscope selon l'une quelconque des revendications 1 à 14,
**caractérisé en ce**
**qu'**un diaphragme de champ est présent pour adapter une taille des images partielles (91, 92) dans un plan d'image intermédiaire (52) dans le trajet de faisceau de détection.

16. Procédé de microscopie,
selon lequel un échantillon (S) est éclairé et balayé linéairement par un objectif d'éclairage (40) avec une lumière d'excitation (12),
selon lequel une lumière d'émission (14) émise par l'échantillon (S) est dirigée par l'intermédiaire d'un objectif de microscope (40) en direction d'une caméra (90) présentant une surface de capteur à résolution spatiale bidimensionnelle,
selon lequel la lumière d'émission (14) est divisée en aval de l'objectif de microscope (40) en plusieurs trajets de faisceau partiels,
selon lequel chacun des trajets de faisceau partiels produit une image partielle (91, 92) de l'échantillon (S) sur une surface de capteur (98) de la caméra (90),
dans lequel les images partielles (91, 92) de l'échantillon (S) se situent les unes à côté des autres sur la surface de capteur (98) de telle sorte que des zones linéaires (93, 94) dans les images partielles (91, 92), qui correspondent à une position de la lumière d'excitation (12) sur ou dans l'échantillon (S), se situent sur la même ligne ou les mêmes ligne (95) de la surface de capteur (98) et
selon lequel les zones à lire de la surface de capteur (98) de la caméra (90) sont synchronisées avec la position de la lumière d'excitation (12) sur l'échantillon.

17. Procédé selon la revendication 16,
**caractérisé en ce**
**qu'**une profondeur de foyer de l'éclairage linéaire est réglée sur une valeur qui correspond à une distance axiale entre deux plans d'échantillons (S1, S2), qui sont conjugués optiquement au plan de la surface de capteur (98) de la caméra (90).

18. Procédé selon la revendication 16 ou 17,
**caractérisé en ce**
**que** lors d'un balayage de volume un incrément axial est inférieur ou égal à la demi-profondeur de champ axiale de la représentation de l'objectif de microscope (40).

19. Procédé selon l'une quelconque des revendications 16 à 18,
**caractérisé en ce**
**que** lors d'un balayage de volume une distance axiale entre les plans d'échantillon (S1, S2) faisant partie des images partielles est un multiple entier de l'incrément axial ou
**que** lors d'un balayage de volume un incrément axial est un multiple entier de la distance axiale entre les plans d'échantillon faisant partie des images partielles.
